(19) Europäisches Patentamt

European Patent Office

Office européen des brevets

(11) **EP 4 757 154 A1**

(12) **EUROPEAN PATENT APPLICATION**

(43) Date of publication:
**10.06.2026 Bulletin 2026/24**

(21) Application number: **25221670.0**

(22) Date of filing: **09.12.2025**

(51) International Patent Classification (IPC):
*H02M 1/12* (2006.01)     *H02M 1/36* (2007.01)
*H02M 7/44* (2006.01)     *H02S 40/30* (2014.01)

(52) Cooperative Patent Classification (CPC):
**H02M 1/123; H02M 1/36; H02M 7/44; H02S 40/30;**
H02J 2101/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024 CN 202411811743
07.01.2025 CN 202510028702**

(71) Applicant: **Shanghai Sigeyuan Intelligent
Technology Co., Ltd
Shanghai 201306 (CN)**

(72) Inventors:
• **CUI, Chenhui
 Shanghai 201306 (CN)**
• **FU, Haoming
 Shanghai 201306 (CN)**
• **WANG, Jianmiao
 Shanghai 201306 (CN)**

(74) Representative: **Di Bernardo, Antonio et al
Thinx S.r.l.
P.le Luigi Cadorna, 10
20123 Milano (IT)**

(54) **INVERTER SYSTEM AND CONTROL METHOD FOR INVERTER SYSTEM**

(57) Provided are an inverter system and a control method for the inverter system, and relates to the field of inverter system technologies. The inverter system includes: a direct current-to-alternating current circuit, a phase relay being disposed at a phase line connected to the direct current-to-alternating current circuit; a first capacitor and a second capacitor that are connected in series between a positive bus and a negative bus of the inverter system; and a first switch module, the first switch module having a first terminal connected to inverter-side ground via a current-limiting resistor in an inverter nighttime repair circuit and a second terminal connected to a neutral point between the first capacitor and the second capacitor. The first switch module is configured to, switch, prior to the inverter system being connected to a power grid, to a first operating mode in which the first terminal is connected to the second terminal.

FIG. 3

**Description**

**FIELD**

The present disclosure relates to the field of inverter system technologies, and more particularly, to an inverter system and a control method for the inverter system.

**BACKGROUND**

A grid-connected photovoltaic inverter is a power electronic device that can convert energy from photovoltaic modules and transmits it to the power grid. The inverter is internally provided with a direct current-to-alternating current device (DC/AC). The direct current-to-alternating current device is connected to an alternating current filter at its alternating current output terminal. The filtered output is connected to the power grid through switches such as a relay, and energy conversion is achieved when the relay is closed. Before the alternating current relay is closed, the waveform of the output is synchronized with a voltage of the power grid to avoid a differential-mode current between the output and the voltage of the power grid. However, this measure only reduces a differential-mode inrush current. The inverter system and the power grid have a common-mode voltage difference relative to the ground, leading to a common-mode inrush current at the moment the relay is closed. This common-mode inrush current can interfere with sampling, control, and other processes of the inverter, causing the inverter system to fail to operate normally.

**SUMMARY**

The present disclosure aims to solve at least one of the technical problems in the related art. Therefore, the present disclosure provides an inverter system and a control method for the inverter system, which can achieve reuse of a nighttime repair circuit and a current-limiting resistor in the nighttime repair circuit. Therefore, on a basis of achieving common-mode suppression for the inverter system, this configuration saves costs of common-mode suppression, and improves safety of common-mode suppression for the inverter system, thereby enhancing safety and stability of the inverter system.

In a first aspect, the present disclosure provides an inverter system. The inverter system includes: a direct current-to-alternating current circuit, a phase relay being disposed at a phase line connected to the direct current-to-alternating current circuit; a first capacitor and a second capacitor that are connected in series between a positive bus and a negative bus of the inverter system; and a first switch module, the first switch module having a first terminal connected to inverter-side ground via a current-limiting resistor in an inverter nighttime repair circuit and a second terminal connected to a neutral point between the first capacitor and the second capacitor. The first switch module is configured to switch, prior to the inverter system being connected to a power grid, to a first operating mode in which the first terminal is connected to the second terminal, to perform common-mode suppression on the inverter system.

With the inverter system according to the present disclosure, the inverter system includes the direct current-to-alternating current circuit, the first capacitor and the second capacitor that are connected in series between the positive bus and the negative bus of the inverter system, and the first switch module having the first terminal connected to inverter-side ground via the current-limiting resistor in the inverter nighttime repair circuit and the second terminal connected to the neutral point between the first capacitor and the second capacitor. Through this configuration of the inverter system, the nighttime repair circuit and the current-limiting resistor of the nighttime repair circuit can be reused. On the basis of achieving the common-mode suppression for the inverter system, there is no need to introduce additional components, which optimizes a circuit structure, reduces a space occupied by the circuit, saves costs of common-mode suppression, and improves safety of common-mode suppression for the inverter system, thereby enhancing safety and stability of the inverter system.

According to an embodiment of the present disclosure, the inverter system is configured to switch to a grid-connected operation in response to the first switch module switching to the first operating mode and a voltage across the current-limiting resistor being smaller than a target threshold.

According to an embodiment of the present disclosure, the inverter nighttime repair circuit includes a diode connected in series with the current-limiting resistor. The current-limiting resistor is located close to an anode of the diode. The first terminal is connected between the anode of the diode and the current-limiting resistor.

According to an embodiment of the present disclosure, the inverter nighttime repair circuit includes a diode connected in series with the current-limiting resistor. The current-limiting resistor is close to an anode of the diode. When a common-mode voltage difference between the neutral point and the inverter-side ground is negative, the first terminal is connected to a cathode of the diode.

According to an embodiment of the present disclosure, the first switch module includes a single-pole double-throw switch having a third terminal connected to a terminal of the direct current-to-alternating current circuit that is connected to the negative bus. The first terminal is disconnected from the third terminal when the first terminal is connected to the second terminal.

According to an embodiment of the present disclosure, the first switch module includes a single-pole single-throw switch. The single-pole single-throw switch is configured to switch to the first operating mode when closed.

According to an embodiment of the present disclosure, the inverter system further includes a neutral line having an end connected to the neutral point. A neutral line relay is disposed at the neutral line.

In a second aspect, the present disclosure provides a grid-connected control method for an inverter system applied to the inverter system described in the first aspect. The method includes: controlling, prior to controlling the inverter system to connect to the power grid, the first switch module to switch to the first operating mode to cause the first terminal to be connected to the second terminal; and controlling, in response to a voltage across the current-limiting resistor being smaller than a target threshold, the inverter system to connect to the power grid.

With the control method for the inverter system according to the present disclosure, by controlling, prior to controlling the inverter system to connect to the power grid, the first switch module to switch to the first operating mode to cause the first terminal to be connected to the second terminal, and controlling, in response to the voltage across the current-limiting resistor being smaller than the target threshold, the inverter system to connect to the power grid, reuse of the nighttime repair circuit and the current-limiting resistor of the nighttime repair circuit can be achieved. Therefore, while suppressing the common-mode voltage difference at the neutral point of the inverter system prior to grid connection, there is no need to introduce additional components, which optimizes a circuit structure, reduces a space occupied by the circuit, saves costs of common-mode suppression, and improves safety of common-mode suppression for the inverter system, thereby enhancing safety and stability of the inverter system.

According to an embodiment of the present disclosure, the target threshold is determined based on a leakage current of the inverter system.

According to an embodiment of the present disclosure, the method further includes, prior to controlling the first switch module to switch to the first operating mode: controlling an output voltage of the inverter system to be in phase-locked synchronization with a voltage of the power grid.

In a third aspect, the present disclosure provides a grid-connected control apparatus for an inverter system applied to the inverter system described in the first aspect. The apparatus includes: a first processor configured to control, prior to controlling the inverter system to connect to a power grid, the first switch module to switch to the first operating mode to cause the first terminal to be connected to the second terminal; and a second processor configured to control, in response to a voltage across the current-limiting resistor being smaller than a target threshold, the inverter system to connect to the power grid.

With the grid-connected control apparatus for the inverter system according to the present disclosure, by controlling, prior to controlling the inverter system to connect to the power grid, the first switch module to switch to the first operating mode to cause the first terminal to be connected to the second terminal, and controlling, in response to the voltage across the current-limiting resistor being smaller than the target threshold, the inverter system to connect to the power grid, reuse of the nighttime repair circuit and the current-limiting resistor of the nighttime repair circuit can be achieved. Therefore, while suppressing the common-mode voltage difference at the neutral point of the inverter system prior to grid connection, there is no need to introduce additional components, which optimizes a circuit structure, reduces a space occupied by the circuit, saves costs of common-mode suppression, and improves safety of common-mode suppression for the inverter system, improving safety and stability of the inverter system.

In a fourth aspect, the present disclosure provides a non-transitory computer-readable storage medium having a computer program stored thereon. The computer program, when executed by a processor, implements the grid-connected control method for the inverter system described in the first aspect.

In a fifth aspect, the present disclosure provides a computer program product including a computer program. The computer program, when executed by a processor, implements the grid-connected control method for the inverter system described in the first aspect.

In a sixth aspect, the present disclosure provides an insulation resistance detection circuit applied to an inverter. The inverter includes a positive bus, a negative bus, a grounding node, a nighttime repair power supply circuit, a first switch, and a current-limiting resistor. The nighttime repair power supply circuit has a first output terminal electrically connected to a first terminal of the first switch and a second output terminal electrically connected to a first terminal of the current-limiting resistor. One of a second terminal of the first switch and a second terminal of the current-limiting resistor is electrically connected to the grounding node, and another of the second terminal of the first switch and the second terminal of the current-limiting resistor is electrically connected to either the positive bus or the negative bus. The insulation resistance detection circuit includes: a switch switching unit electrically connected to the first terminal of the current-limiting resistor and configured to control connection and disconnection between the first terminal of the current-limiting resistor and the positive bus, and/or control connection and disconnection between the first terminal of the current-limiting resistor and the negative bus; and a detection unit electrically connected to the positive bus and the negative bus and configured to detect bus voltages of the positive bus and the negative bus when the switch switching unit is in different conduction states, and determine insulation resistance to ground based on the bus voltages.

According to an embodiment of the present disclosure, the switch switching unit includes a switchable switch having a first contact, a second contact, and a switching part. The first contact is electrically connected to the positive bus, and the second contact is electrically connected to the negative bus. The switching part has a first end electrically connected to the first terminal of the current-limiting resistor and a second end switching among three states: connected to the first contact, connected to the second contact, or left floating.

According to an embodiment of the present disclosure, the detection unit is configured to obtain a first positive bus voltage and a first negative bus voltage when the switch switching unit is in a first state, and to obtain a second positive bus voltage and a second negative bus voltage when the switch switching unit is in a second state. In the first state, the first switch is turned off, and the second end of the switching part is connected to the first contact. In the second state, the first switch is turned off, and the second end of the switching part is connected to the second contact.

According to an embodiment of the present disclosure, the switch switching unit includes: a second switch having a first terminal electrically connected to the first terminal of the current-limiting resistor and a second terminal electrically connected to the negative bus; and/or a third switch having a first terminal electrically connected to the first terminal of the current-limiting resistor and a second terminal electrically connected to the positive bus.

According to an embodiment of the present disclosure, the detection unit is configured to obtain a third positive bus voltage and a third negative bus voltage when the switch switching unit is in a third state, and to obtain a fourth positive bus voltage and a fourth negative bus voltage when the switch switching unit is in a fourth state. In the third state, both the first switch and the third switch are turned off, and the second switch is turned on. In the fourth state, both the first switch and the second switch are turned off, and the third switch is turned on.

According to an embodiment of the present disclosure, the switch switching unit does not include the second switch. The detection unit is configured to obtain a fifth positive bus voltage and a fifth negative bus voltage when the switch switching unit is in a fifth state, and to obtain a sixth positive bus voltage and a sixth negative bus voltage when the switch switching unit in a sixth state. In the fifth state, the first switch is turned off, and the third switch is turned on. In the sixth state, both the first switch and the third switch are turned off.

According to an embodiment of the present disclosure, the switch switching unit does not include the third switch. The detection unit is configured to obtain a seventh positive bus voltage and a seventh negative bus voltage when the switch switching unit is in a seventh state, and to obtain an eighth positive bus voltage and an eighth negative bus voltage when the switch switching unit is in an eighth state. In the seventh state, the first switch is turned off, and the second switch is turned on. In the eighth state, both the first switch and the second switch are turned off.

In a seventh aspect, the present disclosure provides an insulation resistance detection method applied to the insulation resistance detection circuit described in the sixth aspect. The insulation resistance detection method includes: controlling a first switch to turn off; controlling a switch switching unit to switch between different conduction states, the conduction states including connection or disconnection between a first terminal of a current-limiting resistor and a positive bus or a negative bus; obtaining bus voltages of the positive bus and the negative bus in at least two different conduction states; and determining insulation resistance to ground based on the bus voltages.

In an eighth aspect, the present disclosure provides an inverter including the insulation resistance detection circuit described in the sixth aspect.

The above-described one or more technical solutions in the embodiments of the present disclosure have at least one of the following technical effects:

The inverter system includes the direct current-to-alternating current circuit DC/AC, the first capacitor and the second capacitor that are connected in series between the positive bus and the negative bus of the inverter system, and the first switch module having the first terminal connected to inverter-side ground via the current-limiting resistor in the inverter nighttime repair circuit and the second terminal connected to the neutral point between the first capacitor and the second capacitor. Through this configuration of the inverter system, the nighttime repair circuit and the current-limiting resistor of the nighttime repair circuit can be reused. On the basis of achieving the common-mode suppression for the inverter system, there is no need to introduce the additional components, which optimizes the circuit structure, reduces the space occupied by the circuit, saves the costs of common-mode suppression, and improves the safety of common-mode suppression for the inverter system, enhancing the safety and stability of the inverter system.

Furthermore, when the inverter system further includes the neutral line (N line) having the end connected to the neutral point, and the neutral line relay is disposed at the neutral line, the first switch module is configured to, prior to the inverter system being connected to the power grid, switch to the first operating mode in which the first terminal is connected to the second terminal to perform the common-mode suppression on the inverter system. Therefore, common-mode suppression for inverter systems with a variety of different structures can be achieved based on the first switch module, improving flexibility of common-mode suppression for the inverter system based on the first switch module and adaptability of an inverter system structure.

Furthermore, the inverter system is switched to the grid-connected operation in response to the first switch module switching to the first operating mode and the voltage across the current-limiting resistor being smaller than the target threshold. This ensures that the inverter system can switch to the grid-connected operation only when it is determined, based on the voltage across the current-limiting resistor being smaller than the target threshold, that the common-mode suppression for the inverter system based on the first switch module has been completed, which can improve the safety and reliability of common-mode suppression for the inverter system based on the first switch module.

Additional aspects and advantages of the present disclosure will be provided in part in the following description, or will become apparent in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings.

FIG. 1 is a first schematic structural diagram of an inverter system according to embodiments of the present disclosure.

FIG. 2 is a second schematic structural diagram of an inverter system according to embodiments of the present disclosure.

FIG. 3 is a third schematic structural diagram of an inverter system according to embodiments of the present disclosure.

FIG. 4 is a fourth schematic structural diagram of an inverter system according to embodiments of the present disclosure.

FIG. 5 is a fifth schematic structural diagram of an inverter system according to embodiments of the present disclosure.

FIG. 6 is a sixth schematic structural diagram of an inverter system according to embodiments of the present disclosure.

FIG. 7 is a seventh schematic structural diagram of an inverter system according to embodiments of the present disclosure.

FIG. 8 is an eighth schematic structural diagram of an inverter system according to embodiments of the present disclosure.

FIG. 9 is a first schematic flowchart of a control method for an inverter system according to embodiments of the present disclosure.

FIG. 10 is a second schematic flowchart of a control method for an inverter system according to embodiments of the present disclosure.

FIG. 11 is a schematic structural diagram of a control apparatus for an inverter system according to embodiments of the present disclosure.

FIG. 12 is a schematic structural diagram of an electronic device according to embodiments of the present disclosure.

FIG. 13 is a circuit block diagram of an insulation resistance detection circuit according to embodiments of the present disclosure.

FIG. 14 is a first schematic circuit diagram of an insulation resistance detection circuit according to embodiments of the present disclosure.

FIG. 15 is a second schematic circuit diagram of an insulation resistance detection circuit according to embodiments of the present disclosure.

FIG. 16 is a third schematic circuit diagram of an insulation resistance detection circuit according to embodiments of the present disclosure.

FIG. 17 is a fourth schematic circuit diagram of an insulation resistance detection circuit according to embodiments of the present disclosure.

FIG. 18 is a fifth schematic circuit diagram of an insulation resistance detection circuit according to embodiments of the present disclosure.

FIG. 19 is a first schematic flowchart of an insulation resistance detection method according to embodiments of the present disclosure.

FIG. 20 is a second schematic flowchart of an insulation resistance detection circuit according to embodiments of the present disclosure.

Reference numerals of the accompanying drawings:

Insulation resistance detection circuit 100, switch switching unit K110, detection unit J120, nighttime repair power supply circuit 200, first switch to third switch S3 to S5, current-limiting resistor R0, switchable switch S.

**EP 4 757 154 A1**

**DETAILED DESCRIPTION OF THE EMBODIMENTS**

Description will be made clearly on the technical solutions in the embodiments of the present disclosure with accompanying drawings. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

Terms "first", "second" and the like in the specification and claims of the present disclosure are used to distinguish similar objects, rather than to describe a specific sequence or order. It should be understood that data used in this way may be interchanged with each other under appropriate circumstances, such that the embodiments of the present disclosure can be implemented in a sequence other than those illustrated or described in the present disclosure. Further, that objects distinguished by "first", "second", etc. generally belong to one class, and the number of objects is not limited. For example, one or more of the first object can be provided. In addition, "and/or" in the description and claims represents at least one of the correlated objects, and the symbol "/" generally indicates an "or" relationship between the correlated objects preceding and succeeding the symbol.

The embodiments of the present disclosure provide an inverter system.

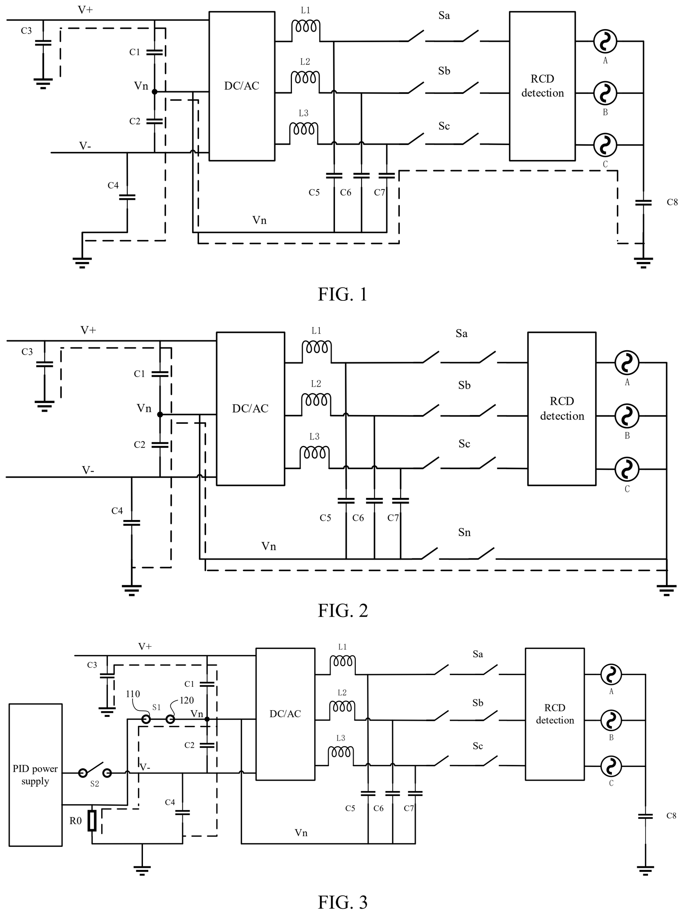

The inverter system according to the embodiments of the present disclosure will be described below with reference to FIG. 1 to FIG. 8.

As illustrated in FIG. 1, the inverter system includes: a direct current-to-alternating current circuit DC/AC, a first capacitor C1 and a second capacitor C2 that are connected in series between a positive bus and a negative bus of the inverter system, and a first switch module.

A phase line connected to the direct current-to-alternating current circuit DC/AC is provided with a phase relay, such as a first phase relay Sa, a second phase relay Sb, and a third phase relay Sc as illustrated in FIG. 1.

The first switch module has a first terminal 110 and a second terminal 120. The first terminal 110 is connected to inverter-side ground via a current-limiting resistor in an inverter nighttime repair circuit. The second terminal 120 is connected to a neutral point Vn between the first capacitor C1 and the second capacitor C2.

The inverter nighttime repair circuit is configured to repair potential induced degradation (PID effect) of a photovoltaic module. In actual operation, the inverter nighttime repair circuit can repair a PID phenomenon that occurs during the daytime by applying a reverse voltage during a period when the inverter stops operating at night.

In actual operation, the neutral point Vn can be formed by two capacitors, that is, the first capacitor C1 and the second capacitor C2, that are connected in series across direct current buses. The first capacitor C1 and the second capacitor C2 divide a direct current voltage in half, and Vn is a voltage division point between the first capacitor C1 and the second capacitor C2.

The first switch module is configured to switch, prior to the inverter system being connected to a power grid, to a first operating mode in which the first terminal 110 is connected to the second terminal 120, to perform common-mode suppression on the inverter system.

The first operating mode is a mode in which the first terminal 110 is connected to the second terminal 120, that is, the first switch is closed, to perform common-mode suppression on the inverter system.

The common-mode suppression refers to suppression of common-mode inrush current generated in the inverter system due to a common-mode voltage difference at the neutral point Vn.

The common-mode voltage difference at the neutral point Vn is a voltage difference between the neutral point Vn and ground.

The common-mode voltage difference may be positive or negative. A positive common-mode voltage difference means that a voltage of the neutral point Vn relative to the ground is positive, and a negative common-mode voltage difference means that the voltage of the neutral point Vn relative to the ground is positive is negative.

As illustrated in FIG. 3, in actual operation, V+ and V- in FIG. 3 denote positive direct current-side bus voltage and negative direct current-side bus voltage, respectively. The first capacitor C1 and the second capacitor C2 are mid-bus capacitors and connected to the direct current-to-alternating current circuit DC/AC. An alternating current filter on an output side of the direct current-to-alternating current circuit DC/AC includes: a first inductor L1, a second inductor L2, a third inductor L3, a fifth capacitor C5, a sixth capacitor C6, and a seventh capacitor C7, which are used to filter the output of the direct current-to-alternating current circuit DC/AC; and. The first phase relay Sa, the second phase relay Sb, and the third phase relay Sc are phase relays. These phase relays are connected to the power grid via a leakage current detection circuit (RCD detection). After the first phase relay Sa, the second phase relay Sb, and the third phase relay Sc are closed, the inverter can transmit energy.

The positive direct current-side bus voltage V+ and the negative direct current-side bus voltage V- of the inverter have common-mode voltages relative to the ground. The third capacitor C3 is an equivalent capacitor of V+ to the ground, the fourth capacitor C4 is an equivalent capacitor of V- to the ground, and the eighth capacitor C8 is an equivalent capacitor of the power grid to the ground. These equivalent capacitors are composed of safety capacitors and parasitic capacitance.

In actual operation, uneven equivalent impedance causes a common-mode voltage difference between the neutral point Vn potential and the ground, and a common-mode inrush current path is formed when any of the above-described alternating current relays is closed.

For example, at a moment when the first phase relay Sa is closed, common-mode inrush current paths are generated due to the common-mode voltage difference at the neutral point Vn: power grid-side ground $\rightarrow$ Phase A power grid $\rightarrow$ first phase relay Sa $\rightarrow$ fifth capacitor C5 $\rightarrow$ neutral point Vn $\rightarrow$ second capacitor C2 $\rightarrow$ fourth capacitor C4 $\rightarrow$ inverter-side ground, and power grid-side ground $\rightarrow$ Phase A power grid $\rightarrow$ first phase relay Sa $\rightarrow$ fifth capacitor C5 $\rightarrow$ neutral point Vn $\rightarrow$ first capacitor C1 $\rightarrow$ third capacitor C3 $\rightarrow$ inverter-side ground. For another example, at a moment when the second phase relay Sb is closed, the common-mode inrush current paths are: power grid-side ground $\rightarrow$ Phase B power grid $\rightarrow$ second phase relay Sb $\rightarrow$ sixth capacitor C6 $\rightarrow$ neutral point Vn $\rightarrow$ second capacitor C2 $\rightarrow$ fourth capacitor C4 $\rightarrow$ inverter-side ground, and power grid-side ground $\rightarrow$ Phase B power grid $\rightarrow$ second phase relay Sb $\rightarrow$ sixth capacitor C6 $\rightarrow$ neutral point Vn $\rightarrow$ first capacitor Cl $\rightarrow$ third capacitor C3 $\rightarrow$ inverter-side ground. For yet another example, at a moment when the third phase relay Sc is closed, the common-mode inrush current paths are: power grid-side ground $\rightarrow$ Phase C power grid $\rightarrow$ third phase relay Sc $\rightarrow$ seventh capacitor C7 $\rightarrow$ neutral point Vn $\rightarrow$ second capacitor C2 $\rightarrow$ fourth capacitor C4 $\rightarrow$ inverter-side ground, and power grid-side ground $\rightarrow$ Phase C power grid $\rightarrow$ third phase relay Sc $\rightarrow$ seventh capacitor C7 $\rightarrow$ neutral point Vn $\rightarrow$ first capacitor C1 $\rightarrow$ third capacitor C3 $\rightarrow$ inverter-side ground. Due to the lack of damping in these paths, an instantaneous charging/discharging current of the capacitors is extremely large, resulting in a common-mode inrush current, which may disrupt the normal operation of the inverter.

As illustrated in FIG. 1, in actual operation, based on configuration of the first switch module (S1), the first switch module has the first terminal 110 connected to the inverter-side ground via a current-limiting resistor R0 in the inverter nighttime repair circuit (PID power supply) and the second terminal 120 connected to the neutral point Vn between the first capacitor C1 and the second capacitor C2. Prior to the inverter is connected to the power grid, that is, prior to closing the relays (the first phase relay Sa, the second phase relay Sb, and the third phase relay Sc), the first terminal 110 of the first switch module is connected to the second terminal 120, that is, the first switch module is closed. A common-mode inrush current path is generated due to the common-mode voltage difference at the neutral point Vn.

For example, as illustrated in FIG. 1, the common-mode inrush current paths are: inverter-side ground $\rightarrow$ current-limiting resistor R0 $\rightarrow$ neutral point Vn $\rightarrow$ first capacitor C1 $\rightarrow$ third capacitor C3 $\rightarrow$ inverter-side ground, and inverter-side ground $\rightarrow$ current-limiting resistor R0 $\rightarrow$ neutral point Vn $\rightarrow$ second capacitor C2 $\rightarrow$ fourth capacitor C4 $\rightarrow$ inverter-side ground.

Due to presence of the current-limiting resistor in the common-mode inrush current paths, the common-mode inrush current is converted into a smaller transient common-mode suppression current.

In some embodiments, the transient common-mode suppression current may be calculated based on the following formula:

$$I0 = Vn'/R0$$

where Vn' denotes the common-mode voltage difference between the neutral point and the ground, I0 denotes the transient common-mode suppression current, and R0 denotes the current-limiting resistor in the inverter nighttime repair circuit.

In actual operation, the transient common-mode suppression current decays exponentially at the moment of generation. When the transient common-mode suppression current drops to a first threshold, the common-mode voltage difference at the neutral point Vn can be considered eliminated or extremely small. Therefore, it can be deemed that the common-mode suppression on the inverter system has been completed. Afterward, closing any relay will not result in a common-mode inrush current, or the common-mode inrush current will be extremely small (and will not affect the normal operation of the inverter system).

The first threshold may be 0. When the transient common-mode suppression current drops to the first threshold, the common-mode voltage difference at the neutral point Vn is considered eliminated, that is, the common-mode voltage difference is 0.

In some embodiments, a decay process of the transient common-mode suppression current can be expressed by the following formula:

$$I(t) = \left(\frac{Vn'}{R0}\right) \times e^{\wedge}(-t/(R0 \times (C3+C4)))$$

where I(t) denotes the transient common-mode suppression current, Vn' denotes the common-mode voltage difference between the neutral point and the ground, R0 denotes the current-limiting resistor in the inverter nighttime repair circuit, t denotes time, e denotes a mathematical constant, and C3 and C4 each denote parasitic capacitance of the inverter to the ground.

As illustrated in FIG. 2, in some embodiments, the inverter system further includes a neutral line (N line) having an end connected to the neutral point Vn, and a neutral line relay is disposed at the neutral line.

In this embodiment, the neutral line relay is denoted as Sn in FIG. 2.

In actual operation, at a moment when the neutral line relay Sn is closed, common-mode inrush current paths are generated due to the common-mode voltage difference at the neutral point Vn. That is, power grid-side ground → neutral line relay Sn → neutral point Vn → second capacitor C2 → fourth capacitor C4 → inverter-side ground, and power grid-side ground → neutral line relay Sn → neutral point Vn → first capacitor C1 → third capacitor C3 → inverter-side ground. The common-mode inrush current paths generated at the moments when the first phase relay Sa, the second phase relay Sb, and the third phase relay Sc are closed are similar to those in the scenario where the above-described inverter system has no neutral line, and thus details thereof will be omitted here.

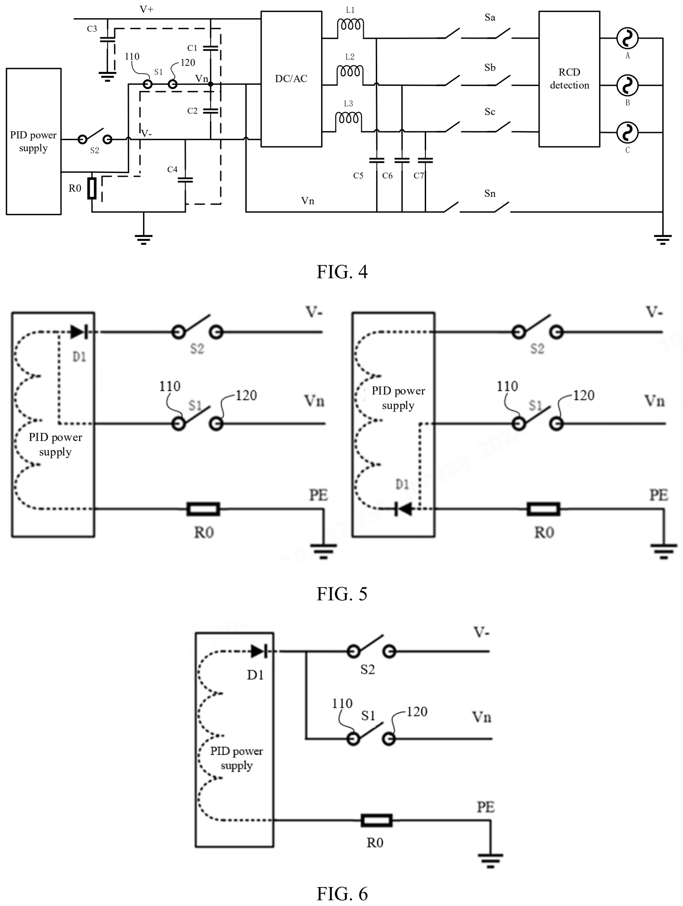

As illustrated in FIG. 4, when the inverter system has the neutral line (N line), the same configuration as in the scenario where the inverter system has no neutral line. The first switch module is configured to switch, prior to the inverter system being connected to the power grid, to the first operating mode in which the first terminal 110 is connected to the second terminal 120, to perform common-mode suppression on the inverter system.

With the inverter system according to the embodiments of the present disclosure, when the inverter system further includes the neutral line (N line) having the end connected to the neutral point Vn, and the neutral line relay Sn is disposed at the neutral line, the first switch module is configured to switch to the first operating mode prior to the inverter system being connected to the power grid, so that the first terminal 110 is connected to the second terminal 120 to perform the common-mode suppression on the inverter system. Therefore, common-mode suppression for inverter systems with a variety of different structures can be achieved based on the first switch module, improving flexibility of common-mode suppression for the inverter system based on the first switch module and adaptability of an inverter system structure.

It should be noted that, when the common-mode suppression for the inverter system is achieved based on the first switch module, the power supply in the inverter nighttime repair circuit does not operate.

During the research and development process, the inventors discovered that in the related art, the common-mode suppression for the inverter system is achieved by adding an N-line inductor or additional anti-common-mode inrush hardware circuit (an anti-common-mode inrush relay is connected in series with an anti-common-mode inrush impedance, and this series combination is connected in parallel with the neutral line relay) when the inverter system includes the neutral line (N line). However, these methods not only require additional circuits and increase costs but also are not applicable to scenarios where the inverter system does not include the neutral line (N line), resulting in limited application scenarios. Alternatively, a software-based method is used to sample a voltage of the inverter system relative to the ground and control the common-mode voltage difference prior to grid connection to reduce common-mode current inrush. However, this control method may cause some components (such as bus capacitors) to exceed their voltage stress, posing a threat to safety of the inverter system.

In the present disclosure, the inverter system includes: the direct current-to-alternating current circuit DC/AC, the phase relay being disposed at the phase line connected to the direct current-to-alternating current circuit DC/AC; the first capacitor C1 and the second capacitor C2 that are connected in series between the positive bus and the negative bus of the inverter system; and the first switch module having the first terminal 110 connected to the inverter-side ground via the current-limiting resistor in the inverter nighttime repair circuit and the second terminal 120 connected to the neutral point Vn between the first capacitor C1 and the second capacitor C2; the first switch module being configured to switch to the first operating mode prior to the inverter system being connected to the power grid, such that the first terminal 110 is connected to the second terminal 120 to perform the common-mode suppression on the inverter system. Through this configuration of the inverter system, the nighttime repair circuit and the current-limiting resistor of the nighttime repair circuit can be reused. On the basis of achieving the common-mode suppression for the inverter system, there is no need to introduce additional components, which optimizes a circuit structure, reduces a space occupied by the circuit, saves costs of common-mode suppression, and improves safety of common-mode suppression for the inverter system, enhancing safety and stability of the inverter system.

With the inverter system according to the embodiments of the present disclosure, the inverter system includes the direct current-to-alternating current circuit DC/AC, the first capacitor C1 and the second capacitor C2 that are connected in series between the positive bus and the negative bus of the inverter system, and the first switch module having the first terminal 110 connected to the inverter-side ground via the current-limiting resistor in the inverter nighttime repair circuit and the second terminal 120 connected to the neutral point Vn between the first capacitor C1 and the second capacitor C2. Through this configuration of the inverter system, the nighttime repair circuit and the current-limiting resistor R0 of the nighttime repair circuit can be reused. On the basis of achieving the common-mode suppression for the inverter system, there is no need to introduce the additional components, which optimizes the circuit structure, reduces the space occupied by the circuit, saves the costs of common-mode suppression, and improves the safety of common-mode suppression for the inverter system, thereby enhancing the safety and stability of the inverter system.

In some embodiments, the inverter system is configured to switch to a grid-connected operation in response to the first switch module switching to the first operating mode and a voltage across the current-limiting resistor R0 being smaller than a target threshold.

In this embodiment, the target threshold may be a predetermined voltage threshold across the current-limiting resistor R0.

The target threshold may be a voltage value across the current-limiting resistor R0 when the transient common-mode suppression current is at the first threshold.

In actual operation, in the first operating mode, the above-described transient common-mode suppression current cannot be obtained in real time. However, as the transient common-mode suppression current decreases with an exponential decay, the voltage across the current-limiting resistor R0 also decreases with an exponential decay. Therefore, by obtaining the real-time voltage across the current-limiting resistor R0 and determining, whether the voltage across the current-limiting resistor R0 has decreased to the target threshold, it can be deduced whether the transient common-mode suppression current has decreased to the first threshold. When the voltage across the current-limiting resistor R0 decreases to the target threshold, it is considered that the transient common-mode suppression current has decreased to the first threshold. Therefore, the common-mode suppression is considered complete, and the inverter can switch to the grid-connected operation.

In some embodiments, a decay process of the voltage across the current-limiting resistor R0 can be expressed by the following formula:

$$V0 = Vn' \times e^{\wedge}(-t/(R0 \times (C3+C4)))$$

where V0 denotes the voltage across the current-limiting resistor, Vn' denotes the common-mode voltage difference between the neutral point and the ground, R0 denotes the current-limiting resistor in the inverter nighttime repair circuit, t denotes time, e denotes the mathematical constant, and C3 and C4 each denote the parasitic capacitance of the inverter to the ground.

With the inverter system according to the embodiments of the present disclosure, by switching the inverter system to the grid-connected operation in response to the first switch module switching to the first operating mode and the voltage across the current-limiting resistor R0 being smaller than the target threshold, the inverter system can switch to the grid-connected operation when it is determined that the common-mode suppression for the inverter system based on the first switch module has been completed based on the voltage across the current-limiting resistor R0 being smaller than the target threshold, which can improve safety and reliability of common-mode suppression for the inverter system based on the first switch module.

In some embodiments, the inverter nighttime repair circuit includes a diode connected in series with the current-limiting resistor R0, and the current-limiting resistor R0 is located close to an anode of the diode D1. The first terminal 110 is connected between the anode of the diode D1 and the current-limiting resistor R0.

In this embodiment, as illustrated in FIG. 5, the inverter nighttime repair circuit (PID) includes the diode D1. The current-limiting resistor R0 is connected to the anode of the diode D1, and the first terminal 110 of the first switch module (S1) is connected to a node between the current-limiting resistor R0 and the anode of the diode D1, enabling complete common-mode suppression for the inverter system based on the first switch module.

The complete common-mode suppression for the inverter system can be understood as follows: regardless of whether the common-mode voltage difference at the neutral point Vn is positive or negative, the common-mode suppression for the inverter system can be achieved based on the first switch module.

With the inverter system according to the embodiments of the present disclosure, by connecting the first terminal 110 between the anode of the diode D1, which is included in the inverter nighttime repair circuit and connected in series with the current-limiting resistor R0, and the current-limiting resistor R0 located close to the anode of diode D1, the nighttime repair circuit and the current-limiting resistor R0 in the nighttime repair circuit can be reused, achieving the common-mode suppression for the inverter system.

In some embodiments, the inverter nighttime repair circuit includes a diode D1 connected in series with the current-limiting resistor R0, and the current-limiting resistor R0 is located close to an anode of the diode D1. When the common-mode voltage difference between the neutral point Vn and the inverter-side ground is negative, the first terminal 110 is connected to a cathode of the diode D1.

In this embodiment, as illustrated in FIG. 6, the inverter nighttime repair circuit (PID) includes the diode D1. The current-limiting resistor R0 is connected to the anode of the diode D1, and the first terminal 110 of the first switch module (S1) is connected to the cathode of the diode D1. This configuration enables the common-mode suppression for the inverter system to be achieved based on the first switch module when the common-mode voltage difference at the neutral point Vn is negative.

With the inverter system according to the embodiments of the present disclosure, by connecting the first terminal 110 to the cathode of the diode D1 that is included in the inverter nighttime repair circuit and connected in series with the current limiting resistor R0, the nighttime repair circuit and the current limiting resistor R0 in the nighttime repair circuit can be reused. This achieves the common-mode suppression for the inverter system when the common-mode voltage difference at the neutral point Vn is negative. In this way, a variety of connection methods between the first switch module and the inverter nighttime repair circuit are provided, improving flexibility and applicability of common-mode suppression for the inverter system based on the first switch module.

In some embodiments, the first switch module includes a single-pole double-throw switch having a third terminal connected to a terminal of the direct current-to-alternating current circuit that is connected to the negative bus. The first terminal 110 is disconnected from the third terminal when the first terminal 110 is connected to the second terminal 120.

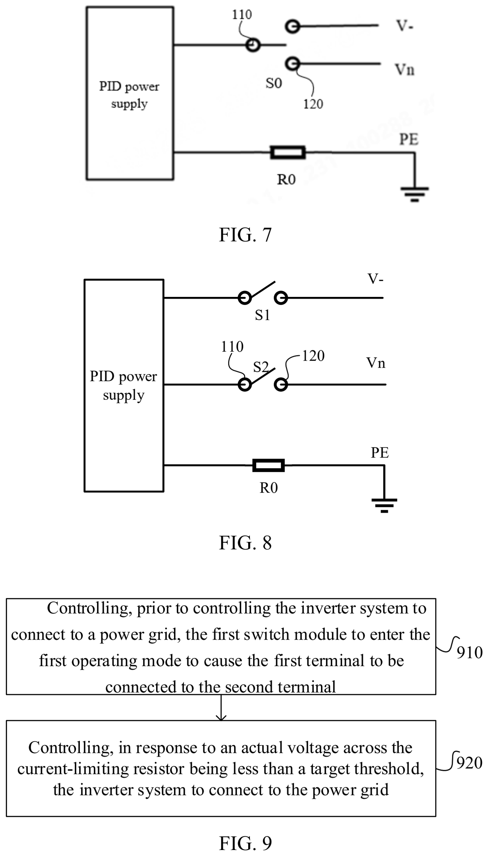

As illustrated in FIG. 7, in this embodiment, the first switch module includes the single-pole double-throw switch, a connection relationship between the first terminal 110 of the first switch module and the inverter nighttime repair circuit is as follows: the inverter nighttime repair circuit includes the diode D1 connected in series with the current-limiting resistor R0, and the current-limiting resistor R0 is located close to the anode of the diode D1. When the common-mode voltage difference between the neutral point Vn and the inverter-side ground is negative, the first terminal 110 is connected to the cathode of the diode D1.

In actual operation, as illustrated in FIG. 7, the first switch module includes a single-pole double-throw switch (S0). The single-pole double-throw switch (S0) has the third terminal connected to the other side of direct current-to-alternating current circuit DC/AC (negative direct current bus V-), i.e., the terminal of the direct current-to-alternating current circuit that is connected to the negative bus. The first terminal 110 of the single-pole double-throw switch (S0) can be connected to either the second terminal 120 or the third terminal. When the first terminal 110 of the single-pole double-throw switch (S0) is connected to the second terminal 120, the first terminal 110 is disconnected from the third terminal, enabling. the inverter system to achieve common-mode suppression based on the first switch module when the common-mode voltage difference at the neutral point Vn is negative. when the first terminal 110 of the single-pole double-throw switch (S0) is connected to the third terminal, the first terminal 110 is disconnected from the second terminal 120, enabling the inverter system to implement nighttime repair of the inverter system based on the first switch module.

It should be noted that, when the first switch module includes the single-pole double-throw switch, and the nighttime repair of the inverter system is implemented based on the first switch module, the power supply in the inverter nighttime repair circuit operates.

With the inverter system according to the embodiments of the present disclosure, the single-pole double-throw switch included in the first switch module has the third terminal connected to a terminal of the direct current-to-alternating current circuit that is connected to the negative bus. The first terminal 110 is disconnected from the third terminal when the first terminal 110 is connected to the second terminal 120, which achieves reuse of the nighttime repair circuit and the current-limiting resistor R0 in the nighttime repair circuit, while saving costs of the first switch module. Also, it allows switching between two different connection methods, improving the flexibility of the first switch module. In addition, the single-pole double-throw switch operates in a break-before-make operation mode, which can reduce a risk of short circuits and improve the safety of the inverter system.

In some embodiments, the first switch module includes a single-pole single-throw switch. The single-pole single-throw switch is configured to switch to the first operating mode when closed.

As illustrated in FIG. 5, FIG. 6, and FIG. 8, in this embodiment, the first switch module (S1) is the single-pole single-throw switch. A connection relationship between the first terminal 110 of the first switch module and the inverter nighttime repair circuit may be as follows: the inverter nighttime repair circuit includes the diode D1, the current-limiting resistor R0 is connected to the anode of the diode D1, and the first switch module has the first terminal 110 connected to a node between the current-limiting resistor R0 and the anode of the diode D1; or, the inverter nighttime repair circuit includes the diode D1 connected in series with the current-limiting resistor R0, the current-limiting resistor R0 is located close to the anode of the diode D1, and the first terminal 110 is connected to the cathode of the diode D1 when the common-mode voltage difference between the neutral point Vn and the inverter-side ground is negative.

When the single-pole single-throw switch is closed, that is, when the first terminal 110 of the first switch module is connected to the second terminal 120, the first switch module, that is, the single-pole single-throw switch, switches to the first operating mode, achieving the common-mode suppression for the inverter system.

With the inverter system according to the embodiments of the present disclosure, the single-pole single-throw switch is configured to switch to the first operating mode when closed. Through this single-pole single-throw switch included in the first switch module, common-mode suppression for the inverter system based on the single-pole single-throw switch can be achieved regardless of whether the common-mode voltage difference at the neutral point Vn is positive or negative, improving the applicability of the first switch module to various application scenarios.

A grid-connected control method for an inverter system, a grid-connected control apparatus for the inverter system, and a readable storage medium according to embodiments of the present disclosure will be described in detail below through specific embodiments and application scenarios with reference to the accompanying drawings.

The grid-connected control method for the inverter system may be applied to the inverter system described in any of the above embodiments.

With the grid-connected control method for the inverter system according to the embodiments of the present disclosure, an execution subject of the grid-connected control method for the inverter system can be an inverter system, or a functional module or a functional entity in the inverter system capable of implementing the grid-connected control method for the inverter system. The grid-connected control method for the inverter system according to the embodiments of the present disclosure is described below by taking the inverter system being the execution subject as an example.

As illustrated in FIG. 9, the grid-connected control method for the inverter system includes operations at steps 910 and 920.

At step 910, prior to controlling the inverter system to connect to a power grid, the first switch module is controlled to switch to the first operating mode to cause the first terminal 110 to be connected to the second terminal 120.

At this step, the first switch module includes the first terminal 110 and the second terminal 120. the first switch module is configured to be connected to inverter-side ground via the current-limiting resistor R0 in an inverter nighttime repair circuit based on the first terminal 110, and to be connected to the neutral point Vn between the first capacitor C1 and the second capacitor C2 based on the second terminal 120. In this way, the inverter nighttime repair circuit and the current-limiting resistor R0 in the inverter nighttime repair circuit can be reused, thereby achieving common-mode suppression for the inverter system.

The first operating mode is a mode where the first terminal 110 is connected to the second terminal 120, that is, the first switch module is closed, to perform common-mode suppression on the inverter system.

As illustrated in FIG. 1, in actual operation, prior to controlling the inverter system to be connected to the power grid, the first switch module is controlled to switch to the first operating mode to connect the first terminal 110 to the second terminal 120, which can convert the common-mode inrush current generated by the common-mode voltage difference at the neutral point Vn of the inverter system into the transient common-mode suppression current based on the presence of the current-limiting resistor R0. The transient common-mode suppression current decays exponentially until it drops to the first threshold. When the transient common-mode suppression current drops to the first threshold, the common-mode voltage difference at the neutral point Vn can be considered eliminated or extremely small. Therefore, it can be deemed that the common-mode suppression for the inverter system has been completed. Afterwards, closing any relay results in no common-mode inrush current or an extremely small common-mode inrush current (which does not affect normal operation of the inverter system).

The first threshold can be set to 0. When the transient common-mode suppression current drops to 0, the common-mode voltage difference at the neutral point Vn is considered eliminated, that is, the common-mode voltage difference is 0, achieving the common-mode suppression for the inverter system.

At step 920, the inverter system is controlled to connect to the power grid in response to a voltage across the current-limiting resistor being smaller than a target threshold.

At this step, the target threshold may be a predetermined voltage threshold across the current-limiting resistor R0.

The target threshold may be the voltage value across the current-limiting resistor R0 when the transient common-mode suppression current is at the first threshold.

In actual operation, in the first operating mode, the above-described transient common-mode suppression current cannot be obtained in real time. However, as the transient common-mode suppression current decreases with an exponential decay, the voltage across the current-limiting resistor R0 also decreases with an exponential decay. Therefore, by obtaining the real-time voltage across the current-limiting resistor R0 and determining whether the voltage across the current-limiting resistor R0 has decreased to the target threshold, it can be deduced whether the transient common-mode suppression current has decreased to the first threshold. When the voltage across the current-limiting resistor R0 decreases to the target threshold, it is considered that the transient common-mode suppression current has decreased to the first threshold. Therefore, the common-mode suppression is considered complete, and the inverter can switch to the grid-connected operation.

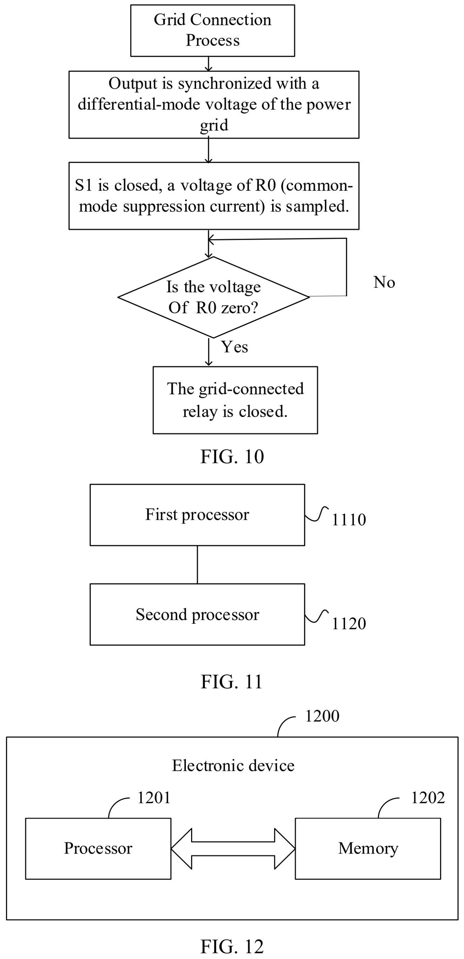

As illustrated in FIG. 10, in some embodiments, the target threshold may be set to 0. That is, when the voltage across the current-limiting resistor R0 drops to 0, the transient common-mode suppression current is considered to have dropped to 0, indicating that the common-mode suppression has been completed. Under this condition, when the inverter switches to grid-connected operation, no common-mode inrush current will be generated.

With the control method for the inverter system according to the embodiments of the present disclosure, by controlling, prior to controlling the inverter system to connect to the power grid, the first switch module to switch to the first operating mode to cause the first terminal 110 to be connected to the second terminal 120, and controlling, in response to the voltage across the current-limiting resistor R0 being smaller than the target threshold, the inverter system to connect to the power grid, the reuse of the nighttime repair circuit and the current-limiting resistor R0 of the nighttime repair circuit can be achieved. Therefore, while suppressing the common-mode voltage difference at the neutral point Vn of the inverter system prior to grid connection, there is no need to introduce additional components, which optimizes a circuit structure, reduces a space occupied by the circuit, saves costs of common-mode suppression, and improves safety of common-mode suppression for the inverter system, improving safety and stability of the inverter system.

In some embodiments, the target threshold is determined based on the leakage current of the inverter system.

In this embodiment, the leakage current of the inverter system refers to the common-mode current generated across a parasitic capacitance formed between the inverter and the ground when a loop is formed among the parasitic capacitance, a photovoltaic system, and the power grid.

In actual operation, due to circuit leakage current and non-ideal characteristics, when the voltage across the current-limiting resistor R0 decreases exponentially with the transient common-mode suppression current, the voltage across the current-limiting resistor R0 does not completely decrease to 0. In such a case, the target threshold can be set. When the current-limiting resistor R0 decreases to the target threshold, it is considered that the transient common-mode suppression current has decreased to the first threshold, that is, the common-mode voltage difference at the neutral point Vn has been eliminated to an extremely small value. When the inverter system switches to the grid-connected operation, the common-mode inrush current generated by this extremely small common-mode voltage difference at the neutral point Vn does not affect the normal operation of the inverter system.

It should be understood that, the target threshold may be the voltage across the current-limiting resistor R0 when the common-mode inrush current, generated by the common-mode voltage difference at the neutral point Vn in response to the inverter system switching to the grid-connected operation, does not affect the normal operation of the inverter system.

With the grid-connected control method for the inverter system according to the embodiments of the present disclosure, by determining the target threshold based on the leakage current of the inverter system, a reasonable determination of the target threshold based on actual conditions can be achieved, which improves reliability of the target threshold, facilitating practical application of the common-mode suppression for the inverter system based on the first switch module.

As illustrated in FIG. 10, in some embodiments, the method may further include, prior to controlling the first switch module to switch to the first operating mode: controlling an output voltage of the inverter system to be phase-locked synchronization with a voltage of the power grid.

In this embodiment, phase-locked synchronization may be implemented by the control system to synchronize the phases of the output voltage of the inverter system and the voltage of the power grid.

In actual operation, controlling the output voltage of the inverter system to be in phase-locked synchronization with the voltage of the power grid can reduce a differential-mode inrush current on the power grid when the inverter switches to the grid-connected operation.

The differential-mode inrush current refers to current surge generated due to sudden voltage changes when the inverter is connected to the power grid. In actual operation, the differential-mode inrush current may cause adverse effects on the power grid and the inverter itself, including equipment damage, reduced stability of the power grid, electromagnetic interference, and so on.

With the grid-connected control method for the inverter system according to the embodiments of the present disclosure, by controlling, prior to controlling the first switch module to switch to the first operating mode, the output voltage of the inverter system to be in phase-locked synchronization with the voltage of the power grid, the differential-mode inrush current on the power grid when the inverter switches to the grid-connected operation can be reduced, improving the safety and stability of the inverter system.

The execution subject of the grid-connected control method for the inverter system according to the embodiments of the present disclosure can be a grid-connected control apparatus for the inverter system. In the embodiments of the present disclosure, the grid-connected control method for the inverter system executed by the grid-connected control apparatus for the inverter system is taken as an example to describe the grid-connected control apparatus for the inverter system provided in the embodiments of the present disclosure.

The embodiments of the present disclosure further provide a grid-connected control apparatus for an inverter system.

As illustrated in FIG. 11, the grid-connected control apparatus for the inverter system includes: a first processor 1111 and a second processor 1120.

The first processor 1111 is configured to control, prior to controlling the inverter system to connect to a power grid, the first switch module to switch to the first operating mode to cause the first terminal 110 to be connected to the second terminal 120.

The second processor 1120 is configured to control, in response to a voltage across the current-limiting resistor R0 being smaller than a target threshold, the inverter system to connect to the power grid.

With the grid-connected control apparatus for the inverter system according to the embodiments of the present disclosure, by controlling, prior to controlling the inverter system to connect to the power grid, the first switch module to switch to the first operating mode to cause the first terminal 110 to be connected to the second terminal 120, and controlling, in response to the voltage across the current-limiting resistor R0 being smaller than the target threshold, the inverter system to connect to the power grid, the reuse of the nighttime repair circuit and the current-limiting resistor R0 of the nighttime repair circuit can be achieved. Therefore, while suppressing the common-mode voltage difference at the neutral point Vn of the inverter system prior to grid connection, there is no need to introduce additional components, which optimizes a circuit structure, reduces a space occupied by the circuit, saves cost of common-mode suppression, and improves safety of common-mode suppression for the inverter system, improving safety and stability of the inverter system.

In some embodiments, the first processor 1110 may further be configured to control, prior to controlling the first switch module to switch to the first operating mode, an output voltage of the inverter system to be in phase-locked synchronization with the voltage of the power grid.

The grid-connected control apparatus for the inverter system according to the embodiments of the present application can be a device having an operating system. The operating system can be an Android operating system, an IOS operating system, or other possible operating systems, which are not specifically limited in the embodiments of the present disclosure.

The grid-connected control apparatus for the inverter system according to the embodiments of the present disclosure can implement each process of the method embodiments of FIG. 9 and FIG. 10, and thus details thereof will be omitted herein to avoid repetition.

A photovoltaic inverter system can feed energy from a photovoltaic array to the power grid and a user through power conversion stages such as rectification (DC/DC) and inversion (DC/AC). Under certain abnormal conditions of the system, a decrease in the insulation resistance to ground on the direct current-side may lead to a leakage current that causes harm to personnel and equipment. Therefore, the system usually requires a insulation resistance detection to ground to respond to abnormal insulation resistance to ground.

At present, an insulation resistance to ground detection solution usually involves adding a dedicated detection circuit for signal detection and calculation, which undoubtedly increases costs of the system significantly.

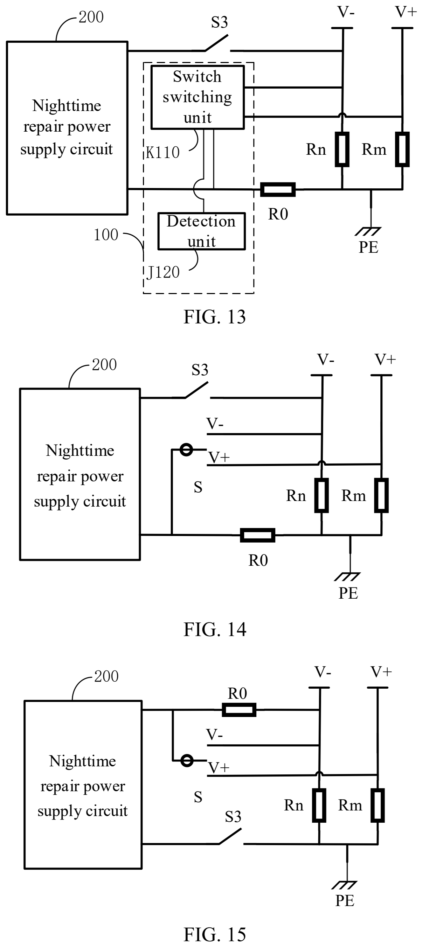

As illustrated in FIG. 13, which shows a structure of an insulation resistance detection circuit, an embodiment of the present disclosure provides an insulation resistance detection circuit. In this embodiment, the insulation resistance detection circuit 100 is applied to an inverter. The inverter includes a positive bus V+, a negative bus V-, a grounding node PE, a nighttime repair power supply circuit 200, a first switch S3, and a current-limiting resistor R0. The nighttime repair power supply circuit 200 has a first output terminal electrically connected to a first terminal of the first switch S3 and a second output terminal electrically connected to a first terminal of the current-limiting resistor R0. One of a second terminal of the first switch S3 and a second terminal of the current-limiting resistor R0 is electrically connected to the grounding node PE, and another of the second terminal of the first switch S3 and the second terminal of the current-limiting resistor R0 is electrically connected to either the positive bus V+ or the negative bus V-. The insulation resistance detection circuit 100 includes a switch switching unit K110 and a detection unit J120. The switch switching unit K110 is electrically connected to the first terminal of the current-limiting resistor R0, and is configured to control connection and disconnection between the first terminal of the current-limiting resistor R0 and the positive bus V+, and/or to control connection and disconnection between the first terminal of the current-limiting resistor R0 and the negative bus V-. The detection unit J120 is electrically connected to the positive bus V+ and the negative bus V- and is configured to detect bus voltages of the positive bus V+ and the negative bus V- when the switch switching unit K110 is in different conduction states, and to determine insulation resistance to ground based on the bus voltages.

It should be understood that, the nighttime repair power supply circuit 200 is configured to repair a photovoltaic module at night, particularly to compensate for a potential induced degradation (PID) effect. During nighttime or when the inverter is not generating power, the nighttime repair power supply circuit 200 is activated. By controlling opening and closing of the first switch S3, the positive bus and the negative bus of the inverter are short-circuited, and a certain positive bias voltage is applied between the positive and negative buses of the inverter and the grounding node PE. This positive bias voltage helps to perform bias repair on the photovoltaic module, reducing the PID effect. During the bias repair process, the positive bias voltage acts on a surface of the photovoltaic module, which makes charge distribution inside the module uniform, mitigating performance degradation caused by the PID effect. The specific structure and principle of the nighttime repair power supply circuit 200 are based on mature technologies, and thus details thereof will be omitted here.

As an example, the first output terminal of the nighttime power supply circuit 200 is electrically connected to the first terminal of the first switch S3, the second terminal of the first switch S3 is electrically connected to the negative bus V-, the second output terminal of the nighttime power supply circuit 200 is electrically connected to the first terminal of the current-limiting resistor R0, and the second terminal of the current-limiting resistor R0 is electrically connected to the grounding node PE. During the daytime, the nighttime power supply circuit 200 is inactive, and the first switch S3 is in an open state. During the nighttime or when the inverter is not generating power, the nighttime power supply circuit is activated, and the first switch S3 is in a closed state. In other embodiments of the present disclosure, the connection configuration of the first switch S3 and the current-limiting resistor R0 may vary, which is not limited in this embodiment.

In this embodiment, based on the nighttime power supply circuit 200, the insulation resistance detection circuit 100 is introduced to reuse the current-limiting resistor R0 for insulation resistance detection is achieved by setting the insulation resistance detection circuit 100 to reuse the current-limiting resistor R0, which can reduce additional hardware costs. In FIG. 13, Rn denotes the insulation resistance of the negative bus V- to the ground, and Rm denotes the insulation resistance of the positive bus V+ to the ground. The switch switching unit K110 can connect the current-limiting resistor R0 between the negative bus V- and the ground or between the positive bus V+ and the ground, thereby altering impedance of the negative bus V- to ground or the positive bus V+ to the ground. In this way, the insulation resistance can be calculated by establishing a voltage relationship and solving it. The specific calculation method is determined based on the switching conditions of the current-limiting resistor R0, which will be explained in detail later.

The detection unit J120 may be integrated into a controller in the inverter, and can also be an independent unit. The detection unit J120 is primarily configured to sample and calculate the bus voltage. The switch switching unit K110 may be controlled by the detection unit J120 or by the controller in the inverter.

In addition, the detection unit can generate a warning signal when the calculated insulation resistance exceeds a safe range, thereby shutting down the inverter to protect safety of personnel and equipment. If the calculated insulation resistance is within the safe range, a safety signal is generated, or no feedback signal is given.

With the insulation resistance detection circuit 100 according to the present disclosure, by adding the switch switching unit K110 and reusing the current-limiting resistor R0 of the original nighttime repair power supply circuit 200 in the inverter, the voltages of the positive bus V+ and negative bus V- to the ground is detected. In turn, the insulation resistance to the ground is calculated, thereby achieving the insulation resistance to the ground detection with relatively high accuracy. This requires fewer additional components and results in lower system costs. Also, fewer additional components are required, and an increase in system costs is relatively low.

As illustrated in FIG. 14, FIG. 14 shows a schematic circuit diagram of an insulation resistance detection circuit. In some embodiments, the switch switching unit K110 includes a switchable switch S. The switchable switch S has a first contact, a second contact, and a switching part. The first contact is electrically connected to the positive bus V+, and the second contact is electrically connected to the negative bus V-. The switching part has a first end electrically connected to the first terminal of the current-limiting resistor R0 and a second end switching among three states: connected to the first contact, connected to the second contact, or left floating.

The switchable switch S may be a single-pole double-throw switch, a relay, or a semiconductor switch device, etc., and may be controlled by the detection unit J120 or the controller in the inverter. By controlling whether the current-limiting resistor R0 is connected to the bus, and whether it is connected to the positive bus V+ or the negative bus V-, the switchable switch S provides three voltage states between the bus and the ground. In this way, the insulation resistance to ground can be calculated based on the voltage relationship under different voltage states.

As an example, the detection unit J120 is configured to obtain a first positive bus voltage and a first negative bus voltage when the switch switching unit K110 is in a first state, and to obtain a second positive bus voltage and a second negative bus voltage when the switch switching unit K110 is in a second state. In the first state, the first switch S3 is turned off, and the second end of the switching part is connected to the first contact. In the second state, the first switch S3 is turned off, and the second end of the switching part is connected to the second contact.

In this example, when the inverter performs detection of insulation resistance to ground, the nighttime repair power supply circuit 200 is inactive, that is, the first switch S3 is turned off. In this case, the current-limiting resistor R0 is connected to either the positive bus V+ or the negative bus V- to establish two voltage relationships, calculating the insulation resistance. In addition, when the nighttime repair power supply circuit 200 is active, the first switch S3 is turned on, and the second end of the switching part of the switchable switch S is left floating.

In the first state, when the current-limiting resistor R0 is connected to the positive bus V+, the following relationship holds: Vm1*(Rm+R0)/(Rm*R0)=-Vn1/Rn. Here, Vm1 indicates detected insulation resistance of the positive bus V+ to the ground in this state, and Vn1 indicates detected insulation resistance of the negative bus V- to the ground in this state.

In the second state, when the current-limiting resistor R0 is connected to the negative bus V-, the following relationship holds: Vm2/Rm=-Vn2*(Rn+R0)/(Rn*R0). Here, Vm2 indicates the detected insulation resistance of the positive bus V+ to the ground in this state, and Vn2 indicates the detected insulation resistance of the negative bus V- to the ground in this state.

By simultaneously solving the above-described two equations, the following can be obtained:

$$Rm=(R0*Vm2*Vn1-R0*Vm1*Vn2)/(Vm1*Vn2-Vn2*Vn1),$$

and

$$Rn=(R0*Vm1*Vn2-R0*Vm2*Vn1)/(Vm2*Vm1-Vm1*Vn2),$$

Here, Rm denotes insulation resistance of the positive bus V+ to the ground, and Rn denotes insulation resistance of the negative bus V- to the ground.

As illustrated in FIG. 15, FIG. 15 shows a schematic circuit diagram of an insulation resistance detection circuit. Compared with FIG. 14, a difference lies in a connection point of the first switch S3 and the current-limiting resistor R0. In this example, the second terminal of the first switch S3 is electrically connected to the grounding node PE, and the second terminal of the current-limiting resistor R0 is electrically connected to the negative bus V-. The detection process of the insulation resistance to ground performed by the detection unit J120 can be the same as that in the above-described embodiment, and thus details thereof will be omitted here.

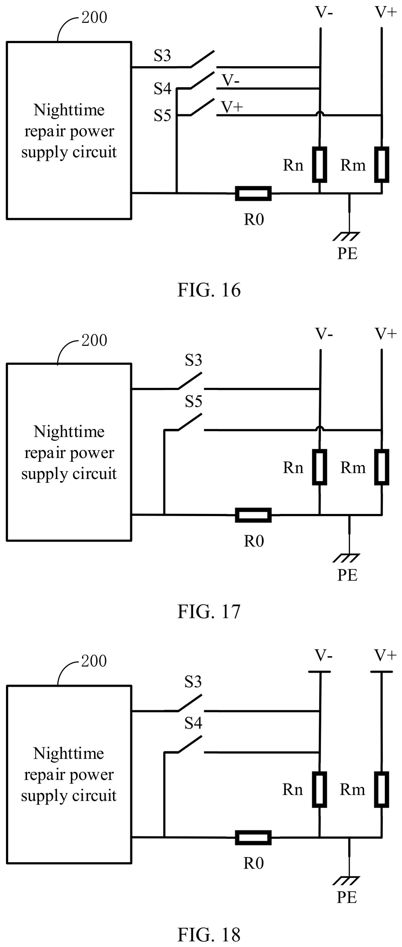

As illustrated in FIG. 16, FIG. 16 shows a schematic circuit diagram of an insulation resistance detection circuit. In some embodiments, the switch switching unit K110 includes a second switch S4 and a third switch S5. The second switch S4 has a first terminal electrically connected to the first terminal of the current-limiting resistor R0 and a second terminal electrically connected to the negative bus V-. The third switch S5 has a first terminal electrically connected to the first terminal of the current-limiting resistor R0 and a second terminal electrically connected to the positive bus V+.

Each of the second switch S4 and the third switch S5 may be a relay or a semiconductor switch device, and may be controlled by the detection unit J120 or the controller in the inverter. The second switch S4 controls whether the current-limiting resistor R0 is connected to the negative bus V-, and the third switch S5 controls whether the current-limiting resistor R0 is connected to the positive bus V+. Since the second switch S4 and the third switch S5 are usually not closed simultaneously, three voltage states between the bus and the ground are provided. The insulation resistance to ground can be calculated based on the voltage relationship under different voltage states.

As an example, the detection unit J120 is configured to obtain a third positive bus voltage and a third negative bus voltage when the switch switching unit K110 is in a third state, and to obtain a fourth positive bus voltage and a fourth negative bus voltage when the switch switching unit K110 is in a fourth state. In the third state, both the first switch S3 and the third switch S5 are turned off, and the second switch S4 is turned on. In the fourth state, both the first switch S3 and the second switch S4 are turned off, and the third switch S5 is turned on.

In this example, when the inverter performs detection of insulation resistance to ground, the nighttime repair power supply circuit 200 is inactive, that is, the first switch S3 is turned off. In this case, the current-limiting resistor R0 is connected to either the positive bus V+ or the negative bus V-, to establish two voltage relationships, calculating the insulation resistance. In addition, when the nighttime repair power supply circuit 200 is active, the first switch S3 is turned on, and both the second switch S4 and the third switch S5 are turned off.

In the third state, when the current-limiting resistor R0 is connected to the negative bus V-, the following relationship holds: $Vm3/Rm=-Vn3*(Rn+R0)/(Rn*R0)$. Here, Vm3 indicates the detected insulation resistance of the positive bus V+ to the ground in this state, and Vn3 indicates the detected insulation resistance of the negative bus V- to the ground in this state.

In the fourth state, when the current-limiting resistor R0 is connected to the positive bus V+, the following relationship holds: $Vm4*(Rm+R0)/(Rm*R0)=-Vn4/Rn$. Here Vm4 indicates the detected insulation resistance of the positive bus V+ to the ground in this state, and Vn4 indicates the detected insulation resistance of the negative bus V- to the ground in this state.

By simultaneously solving the above-described two equations, the following can be obtained:

$$Rm=(R0*Vm3*Vn4-R0*Vm4*Vn3)/(Vm4*Vn3-Vn3*Vn4),$$

and

$$Rn=(R0*Vm4*Vn3-R0*Vm3*Vn4)/(Vm3*Vm4-Vm4*Vn3).$$

Here, where, Rm denotes the insulation resistance of the positive bus V+ to the ground, and Rn denotes the insulation resistance of the negative bus V- to the ground.

As illustrated in FIG. 17, FIG. 17 shows a schematic circuit diagram of an insulation resistance detection circuit. In some embodiments, compared with FIG. 16, the switch switching unit K110 does not include the second switch S4, and the detection unit J120 is configured to obtain a fifth positive bus voltage and a fifth negative bus voltage when the switch switching unit K110 is in a fifth state, and to obtain a sixth positive bus voltage and a sixth negative bus voltage when the switch switching unit K110 is in a sixth state. In the fifth state, the first switch S3 is turned off, and the third switch S5 is turned on. In the sixth state, both the first switch S3 and the third switch S5 are turned off.

In this embodiment, the switch switching unit K110 includes a third switch S5 that controls whether the current-limiting resistor R0 is connected to the positive bus V+. In this way, two voltage states are provided between the bus and the ground, and the insulation resistance to ground can be calculated based on the voltage relationship under different voltage states.

In this example, when the inverter performs detection of insulation resistance to ground, the nighttime repair power supply circuit 200 is inactive, that is, the first switch S3 is turned off. In this case, the current-limiting resistor R0 is connected to or disconnected from the positive bus V+, to establish two voltage relationships, calculating the insulation resistance. In addition, when the nighttime repair power supply circuit 200 is active, the first switch S3 is turned on and the third switch S5 is turned off.

In the fifth state, when the current-limiting resistor R0 is connected to the positive bus V+, the following relationship holds: Vm5*(Rm+R0)/(Rm*R0)=-Vn5/Rn. Here, Vm5 indicates the detected insulation resistance of the positive bus V+ to the ground in this state, and Vn5 indicates the detected insulation resistance of the negative bus V- to the ground in this state.

In the sixth state, when the current-limiting resistor R0 is not connected to the positive bus V+, Vm6/Rm=-Vn6/Rn; where, Vm6 indicates the detected insulation resistance of the positive bus V+ to the ground in this state, and Vn6 indicates the detected insulation resistance of the negative bus V- to the ground in this state.

By simultaneously solving the above-described two equations, the following can be obtained:

$$Rm=(R0*Vm6*Vn5-R0*Vm5*Vn6)/(Vn6*Vn5),$$

and

$$Rn=(R0*Vm5*Vn6-R0*Vm6*Vn5)/(Vm6*Vn5).$$

Here, Rm denotes the insulation resistance of the positive bus V+ to the ground; and Rn denotes the insulation resistance of the negative bus V- to the ground.

As illustrated in FIG. 18, FIG. 18 shows a schematic circuit diagram of an insulation resistance detection circuit. In some embodiments, compared with FIG. 16, the switch switching unit K110 does not include the third switch S5, and the detection unit J120 is configured to obtain a seventh positive bus voltage and a seventh negative bus voltage when the switch switching unit K110 is in a seventh state, and to obtain an eighth positive bus voltage and an eighth negative bus voltage when the switch switching unit K110 is in an eighth state. In the seventh state, the first switch S3 is turned off, and the second switch S4 is turned on. In the eighth state, both the first switch S3 and the second switch S4 are turned off.

In this embodiment, the switch switching unit K110 includes one second switch S4 that controls whether the current-limiting resistor R0 is connected to the negative bus V-. In this way, two voltage states are provided between the bus and the ground, and the insulation resistance to ground can be calculated based on the voltage relationship under different voltage states.

In this example, when the inverter performs detection of insulation resistance to ground, the nighttime repair power supply circuit 200 is inactive, that is, the first switch S3 is turned off. In this case, the current-limiting resistor R0 is connected to or disconnected from the negative bus V-, to establish two voltage relationships, calculating the insulation resistance. In addition, when the nighttime repair power supply circuit 200 is active, the first switch S3 is turned on, and the second switch S4 is turned off.

In the seventh state, when the current-limiting resistor R0 is connected to the negative bus V-, the following relationship holds: Vn7*(Rn+R0)/(Rn*R0)=-Vm7/Rm. Here, Vm7 indicates the detected insulation resistance of the positive bus V+ to the ground in this state, and Vn7 indicates the detected insulation resistance of the negative bus V- to the ground in this state.

In the eighth state, when the current-limiting resistor R0 is not connected to the negative bus V-, the following relationship holds: Vm8/Rm=-Vn8/Rn. Here, Vm8 indicates the detected insulation resistance of the positive bus V+ to the ground in this state, and Vn8 indicates the detected insulation resistance of the negative bus V- to the ground in this state.

By simultaneously solving the above-described two equations, the following can be obtained:

$$Rm=(R0*Vn8*Vm7-R0*Vn7*Vm8)/(Vm8*Vm7),$$

and

$$Rn=(R0*Vn7*Vm8-R0*Vn8*Vm7)/(Vn8*Vm7).$$

Here, Rm denotes the insulation resistance of the positive bus V+ to the ground; andis obtained, where Rn denotes the insulation resistance of the negative bus V- to the ground.

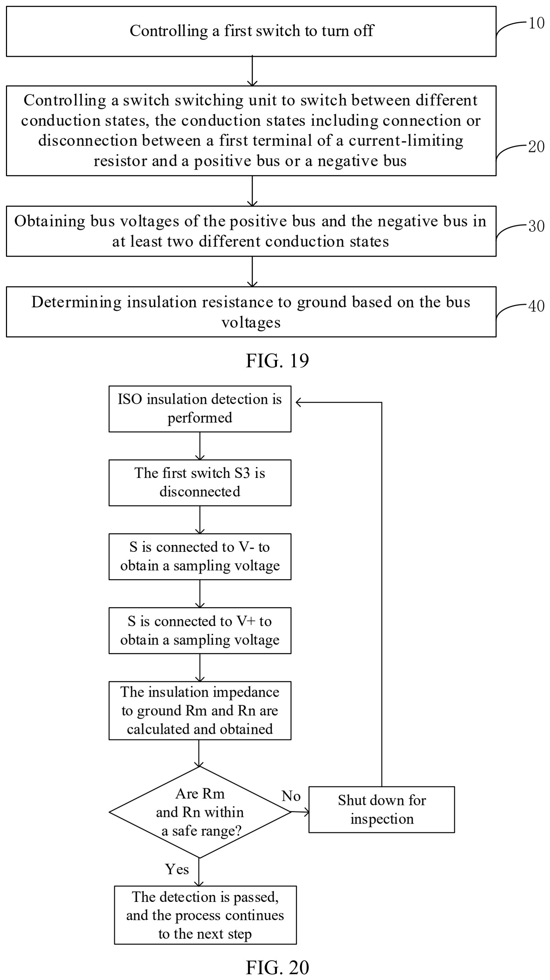

As illustrated in FIG. 19, which shows a flowchart of an insulation resistance detection method, an embodiment of the present disclosure further provides an insulation resistance detection method. This insulation resistance detection method is applied to the above-described insulation resistance detection circuit and includes an operation at step 10, an operation at step 20, an operation at step 30, and an operation at step 40.

At step 10, the first switch S3 is controlled to turn off.

At step 20, a switch switching unit K110 is controlled to switch between different conduction states. The conduction states include connection or disconnection between a first terminal of a current-limiting resistor R0 and a positive bus V+ or a negative bus V-.

At step 30, bus voltages of the positive bus V+ and the negative bus V- in at least two different conduction states are obtained.

At step 40, insulation resistance to ground is determined based on the bus voltages.

It should be noted that, an execution subject of the insulation resistance detection method in this embodiment may be the controller in the inverter or the above-described detection unit J120. In other embodiments of the present disclosure, it may also be other devices or modules, which are not limited in this embodiment. The following description will be given by taking the controller being the execution subject as an example.

The timing for the controller to execute the insulation resistance detection method may be set as desired. For example, the insulation resistance detection method is executed when the inverter is powered on for the first time, or the insulation resistance detection method is executed periodically during inverter operation, such as 10 hours or 20 hours. The insulation resistance detection method can be executed during the daytime or at night.

It should be understood that, the first switch S3 is configured to control whether the nighttime repair power supply circuit 200 operates. When the first switch S3 is turned off, the nighttime repair power supply circuit 200 does not operate, and the current-limiting resistor R0 does not generate additional current due to the operation of the nighttime repair power supply circuit 200, avoiding interference with the detection of insulation resistance to ground.

In some embodiments, the method further includes, prior to step 10: determining whether the nighttime repair power supply circuit 200 meets a disconnection condition based on an operation state of the inverter. If the nighttime repair power supply circuit 200 meets the disconnection condition, a step of controlling the first switch S3 to turn off is executed.

It should be noted that, the controller can determine whether the nighttime repair power supply circuit 200 is operating, or whether the nighttime repair power supply circuit 200 may need to be put into operation, based on operating parameters of the inverter and/or operating parameters of the photovoltaic module. If the repair power supply circuit 200 is not operating or does not need to be put into operation, the nighttime repair power supply circuit 200 meets the disconnection condition. In this way, operation of the inverter can be prevented from being affected by the insulation detection to the ground.

As an example, the nighttime repair power supply circuit 200 can be activated during a specific time period set at night. If the controller detects that a time difference between the current time and the specific time period is smaller than a threshold, it is determined that the nighttime repair power supply circuit 200 may need to be put into operation; otherwise, it is determined that the nighttime repair power supply circuit 200 does not need to be put into operation.

A specific structure of the switch switching unit K110 may refer to FIG. 14 to FIG. 18. Its conduction states vary depending on the specific structure, the corresponding control also refers to the foregoing content, thus details thereof will be omitted here. The order of the various conduction states may not be restricted.

As illustrated in FIG. 20, FIG. 20 shows a flowchart of an insulation resistance detection method. As an example, a process of the insulation resistance detection method is described by taking the insulation resistance detection circuit illustrated in FIG. 14 as an example. The controller performs ISO insulation detection by disconnecting the first switch S3; connecting S to the negative bus V- to obtain a sampling voltage; connecting S to the positive bus V+ to obtain the sampling voltage; calculating and obtaining the insulation resistance to ground Rm and Rn; and determining whether Rm and Rn are within the safe range. If Rm and Rn are within the safe range, the detection is passed, and the process continues to the next step. If Rm or Rn is not within the safe range, the inverter shuts down for inspection. After restarting, the ISO insulation detection is performed again, the above-described steps are repeated.

An embodiment of the present disclosure further provides an inverter including the above-described insulation resistance detection circuit. The specific structure and principle of the insulation resistance detection circuit can be found in the foregoing embodiments, which also have corresponding technical effects. The inverter may further include a controller, which can implement the above-described insulation resistance detection method. The specific process of the insulation resistance detection method can be found in the foregoing embodiments, which also have corresponding technical effects, and thus details thereof will be omitted here.

In some embodiments, as illustrated in FIG. 12, the embodiments of the present disclosure further provide an electronic device 1200 including a processor 1201, a memory 1202, and a computer program stored in the memory 1202 and executable on the processor 901. The program, when executed by the processor 1201, implements the above-described grid-connected control method embodiments for the inverter system, and the same technical effect can be achieved. Details thereof will not be omitted here to avoid repetition.

It should be noted that, the electronic device according to the embodiments of the present disclosure include the mobile electronic device and the non-mobile electronic device described above.

The embodiments of the present disclosure further provide a non-transitory computer-readable storage medium having a computer program stored thereon. The computer program, when executed by a processor, implements the grid-connected control method embodiments for the inverter system described above, and can achieve the same technical effects. Details thereof will not be omitted here to avoid repetition.

The processor is a processor in the electronic device described in the above embodiments. The readable storage medium includes a computer-readable storage medium such as a computer read-only memory (ROM), a random access memory (RAM), a magnetic disk, or an optical disk.

The embodiments of the present disclosure further provide a chip including a processor and a communication interface coupled to the processor. The processor is configured to run a program or an instruction to implement the grid-connected control method embodiments for the inverter system, and can achieve the same technical effect. Details thereof will not be omitted here to avoid repetition.

It should be understood that, the chip mentioned in the embodiments of the present disclosure can also be referred to as a system-level chip, a system-chip, a chip system, or a system-on-chip.

Further, in the present disclosure, it should be noted that terms "comprise", "include" or any other variations thereof are meant to cover non-exclusive including, such that the process, method, goods or device including a series of elements do not only include those elements, but further include other elements that are not explicitly listed, or further include inherent elements of the process, method, goods or device. In a case that there are no more restrictions, an element limited with the statement "comprises a ..." does not exclude the presence of additional identical elements in the process, method, goods or device that includes the said element. In addition, it should be noted that the scope of the methods and devices in the embodiments of the present disclosure is not limited to performing functions in the order shown or discussed, and can also include performing functions in a substantially simultaneous manner or in the reverse order according to the functions involved. For example, the described methods can be performed in an order different from that described, and various steps can be added, omitted, or combined. In addition, features described with reference to certain examples can be combined in other examples.

From the above description of the implementations, it will be clear to those skilled in the art that the method in the above embodiments can be implemented with the aid of software and a necessary common hardware platform or can be implemented through hardware. In many cases, the former one is a better implementation. Based on this understanding, all of the technical solutions according to the embodiments of the present disclosure, or the part thereof that contributes to the related art, can be embodied in the form of a computer software product. The computer software product can be stored in a storage medium (such as a ROM/RAM, a disk, and an optical disk) and contain instructions to enable a terminal device (which can be a mobile phone, a computer, a server, a network device, etc.) to perform the method described in each of the embodiments of the present disclosure.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure and the protection scope of the claims as attached. These variations are to be encompassed by the protect scope of present disclosure.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

**Claims**

1. An inverter system, comprising:

   a direct current-to-alternating current circuit, wherein a phase relay is disposed at a phase line connected to the direct current-to-alternating current circuit;
   a first capacitor and a second capacitor that are connected in series between a positive bus and a negative bus of the inverter system; and
   a first switch module, wherein a first terminal of the first switch module is connected to inverter-side ground via a current-limiting resistor in an inverter nighttime repair circuit, and a second terminal of the first switch module is connected to a neutral point between the first capacitor and the second capacitor;

wherein the first switch module is configured to switch, prior to the inverter system being connected to a power grid, to a first operating mode in which the first terminal is connected to the second terminal, to perform common-mode suppression on the inverter system.

2. The inverter system according to claim 1, wherein the inverter system is configured to switch to grid-connected operation in response to the first switch module switching to the first operating mode and a voltage across the current-limiting resistor being smaller than a target threshold.

3. The inverter system according to claim 1 or claim 2, wherein the inverter nighttime repair circuit comprises a diode connected in series with the current-limiting resistor, the current-limiting resistor being located close to an anode of the diode, wherein the first terminal is connected between the anode of the diode and the current-limiting resistor.

4. The inverter system according to any one of claims 1 to 3, wherein:
the inverter nighttime repair circuit comprises a diode connected in series with the current-limiting resistor, the current-limiting resistor being located close to an anode of the diode, wherein when a common-mode voltage difference between the neutral point and the inverter-side ground is negative, the first terminal is connected to a cathode of the diode.

5. The inverter system according to claim 4, wherein the first switch module comprises a single-pole double-throw switch having a third terminal connected to a terminal of the direct current-to-alternating current circuit that is connected to the negative bus, the first terminal is disconnected from the third terminal when the first terminal is connected to the second terminal.

6. The inverter system according to any one of claims 1 to 4, wherein the first switch module comprises a single-pole single-throw switch, the single-pole single-throw switch being configured to switch to the first operating mode when closed.

7. The inverter system according to any one of claims 1 to 6, further comprising:
a neutral line having an end connected to the neutral point, wherein a neutral line relay is disposed at the neutral line.

8. A grid-connected control method for an inverter system, applied to the inverter system according to any one of claims 1 to 7, the method comprising:

controlling, prior to controlling the inverter system to connect to a power grid, the first switch module to switch the first operating mode to cause the first terminal to be connected to the second terminal; and
controlling, in response to a voltage across the current-limiting resistor being smaller than a target threshold, the inverter system to connect to the power grid.

9. The grid-connected control method for an inverter system according to claim 8, wherein the target threshold is determined based on a leakage current of the inverter system.

10. The grid-connected control method for an inverter system according to claim 8 or claim 9, the method further comprising, prior to controlling the first switch module to switch to the first operating mode:
controlling an output voltage of the inverter system to be in phase-locked synchronization with a voltage of the power grid.

11. A grid-connected control apparatus for an inverter system, applied to the inverter system according to any one of claims 1 to 7, the apparatus comprising:

a first processor configured to control, prior to controlling the inverter system to connect to a power grid, the first switch module to switch to the first operating mode to cause the first terminal to be connected to the second terminal; and
a second processor configured to control, in response to a voltage across the current-limiting resistor being smaller than a target threshold, the inverter system to connect to the power grid.

12. A non-transitory computer-readable storage medium, having a computer program stored thereon, wherein the computer program, when executed by a processor, implements the grid-connected control method for an inverter system according to any one of claims 8 to 10.

**13.** A computer program product, comprising a computer program, wherein the computer program, when executed by a processor, implements the grid-connected control method for an inverter system according to any one of claims 8 to 10.

FIG. 1

FIG. 2

FIG. 3

FIG. 4

FIG. 5

FIG. 6

110

S0

120

V-

Vn

PID power
supply

R0

PE

FIG. 7

V-

S1

110

S2

120

Vn

PID power
supply

R0

PE

FIG. 8

| Controlling, prior to controlling the inverter system to connect to a power grid, the first switch module to enter the first operating mode to cause the first terminal to be connected to the second terminal | 910 |

| Controlling, in response to an actual voltage across the current-limiting resistor being less than a target threshold, the inverter system to connect to the power grid | 920 |

FIG. 9

```
┌─────────────────────┐
│   Grid Connection   │
│      Process        │
└─────────────────────┘
          │
┌─────────────────────────────┐
│ Output is synchronized with a │
│ differential-mode voltage of the power │
│           grid              │
└─────────────────────────────┘
          │
┌─────────────────────────────┐
│ S1 is closed, a voltage of R0 (common- │
│ mode suppression current) is sampled.  │
└─────────────────────────────┘
          │
     ╱─────────╲
    ╱ Is the voltage ╲        No
    ╲  Of R0 zero?   ╱
     ╲─────────╱
          │ Yes
┌─────────────────────┐
│  The grid-connected │
│   relay is closed.  │
└─────────────────────┘
```

FIG. 10

```
┌─────────────────────┐
│   First processor   │    ⌇ 1110
└─────────────────────┘
          │
┌─────────────────────┐
│  Second processor   │    ⌇ 1120
└─────────────────────┘
```

FIG. 11

1200

```
┌───────────────────────────────────────┐
│            Electronic device           │
│   1201                      1202        │
│ ┌───────────┐          ┌───────────┐   │
│ │ Processor │ ⟺        │  Memory   │   │
│ └───────────┘          └───────────┘   │
└───────────────────────────────────────┘
```

FIG. 12

FIG. 13

FIG. 14

FIG. 15

FIG. 16

FIG. 17

FIG. 18

| Controlling a first switch to turn off | 10 |

↓

| Controlling a switch switching unit to switch between different conduction states, the conduction states including connection or disconnection between a first terminal of a current-limiting resistor and a positive bus or a negative bus | 20 |

↓

| Obtaining bus voltages of the positive bus and the negative bus in at least two different conduction states | 30 |

↓

| Determining insulation resistance to ground based on the bus voltages | 40 |

FIG. 19

ISO insulation detection is performed

↓

The first switch S3 is disconnected

↓

S is connected to V- to obtain a sampling voltage

↓

S is connected to V+ to obtain a sampling voltage

↓

The insulation impedance to ground Rm and Rn are calculated and obtained

↓

Are Rm and Rn within a safe range? —No→ Shut down for inspection

↓ Yes

The detection is passed, and the process continues to the next step

FIG. 20

**EUROPEAN SEARCH REPORT**

Application Number

EP 25 22 1670

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 526 849 A (SUNGROW POWER SUPPLY CO LTD) 6 February 2024 (2024-02-06) * paragraph [0002] - paragraph [0003] * * paragraph [0091] - paragraph [0124] * * paragraph [0140] - paragraph [0141] * * figure 3 * | 1-7 | INV. H02M1/12 H02M1/36 H02M7/44 H02S40/30 |
| X | CN 117 996 850 A (SHANGHAI SIGEYUAN INTELLIGENT TECH CO LTD) 7 May 2024 (2024-05-07) * paragraph [0003] - paragraph [0131] * * figures 3,4 * | 1-13 | |
| A | CN 111 555 340 B (SUNGROW POWER SUPPLY CO LTD) 31 October 2023 (2023-10-31) * figure 6 * | 1-13 | |
| A | CN 117 013 956 A (SHANGHAI SIGEYUAN INTELLIGENT TECH CO LTD) 7 November 2023 (2023-11-07) * figure 7 * | 1-13 | |
| A | CN 116 722 815 A (GINLONG TECH CO LTD) 8 September 2023 (2023-09-08) * paragraph [0050] * * figure 15 * | 1-13 | TECHNICAL FIELDS SEARCHED (IPC) H02M H02J H02S |

The present search report has been drawn up for all claims

| Place of search | Date of completion of the search | Examiner |
|---|---|---|
| The Hague | 8 April 2026 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1670

This annex lists the patent family members relating to the patent documents cited in  the above-mentioned European search report.
The members are as contained in the European Patent Office EDP file on
The European Patent Office is in no way liable for these particulars which are merely given for the purpose of information.

08-04-2026

| Patent document cited in search report | | Publication date | Patent family member(s) | Publication date |
|---|---|---|---|---|
| CN 117526849 | A | 06-02-2024 | NONE | |
| CN 117996850 | A | 07-05-2024 | NONE | |
| CN 111555340 | B | 31-10-2023 | NONE | |
| CN 117013956 | A | 07-11-2023 | NONE | |
| CN 116722815 | A | 08-09-2023 | NONE | |

EPO FORM P0459

For more details about this annex : see Official Journal of the European Patent Office, No. 12/82